# EUROPEAN PATENT APPLICATION

(11) **EP 2 397 298 A1**
(43) Date of publication of application: **21.12.2011**
(21) Application number: 10460025.9
(22) Date of filing: 21.06.2010
(51) Int. Cl.: B29C 33/38, B29C 39/00, G06F 17/50, B29C 67/24

(54) **A method and a system for designing the geometry of a product and/or its mold and the product manufacturing process in the reactive molding technology**

(71) Applicant: ABB Research Ltd, 8050 Zürich (CH)
(72) Inventor: Rajca, Robert, 30-836 Krakow (PL); Sekula, Robert, 30-613 Krakow (PL); Banas, Michal, 31-032 Krakow (PL); Matysiak, Lukasz, 44-100 Gliwice (PL)
(74) Representative: Chochorowska-Winiarska, Krystyna

(57) **Abstract**

The invention relates to an automated method and an automated system for designing the geometry of a product and/or its mold and the product manufacturing process in the reactive molding technology. The inventive method is realized in six steps, and methods of numerical fluid mechanics and computer programs for creating a geometrical model of a product and/or its mold and for calling Web pages in a computer network are used for its improvement and optimization, the computer programs being implemented in the user's computer devices and in the devices of a computing server of the inventive system connected with one another through a computer network. The computer device of the computing server contains a graphical interface module (M5), a data import module (M1), a module generating the numerical grid (M2) of the product and its mold, a computing module (M3), and a results presentation module (M4).

The invention relates also to a product in the form of a computer program which is used for the realization of the inventive method and is suitably implemented in the inventive system.

## Description

The invention relates to a method and a system for designing the geometry of a product and/or its mold and the product manufacturing process in the reactive molding technology, to be used in automated designing of products manufactured by the processes of filling and curing of epoxy resins, and of the molds of these products.

More precisely, the invention is applicable in designing diverse products and processes employed to manufacture these products, especially electrotechnical products such as current transformers, voltage transformers, bushings, poured poles, which contain parts made of metal, plastics etc. sealed in bodies and in their fillings of resin mixtures forming a resin insulation.

Resin mixtures used in electrotechnical product manufacturing processes have a considerable coefficient of thermal expansion and a considerable shrinkage in volume of the material, which involves both thermal shrinkage and so called chemical shrinkage. Thermal shrinkage is caused by cooling of the material from the curing temperature down to the final temperature, for example room temperature, and the accompanying stresses are proportional to the difference between the coefficients of the thermal expansion of the cured resin mixture and of the materials forming the internal parts of the cast product that are poured with this mixture. The chemical contraction is caused by a change in the density of the resin mixture occurring as a result of the chemical reaction of curing.

The process of manufacturing a product in the reactive molding technology based on resin mixtures is characterized by a number of parameters such as the temperature of the resin mixture, the temperature of the mold, the initial temperature of the filled internal parts, the speed of the injected mixture, the time of hardening, the after-bake temperature etc. The process includes a number of stages, such as filing, curing in the mold, removal from the mold, natural cooling, thermal treatment in steady state conditions, etc. Individual stages are performed in different temperatures, also various materials of different coefficients of thermal expansion are used in the inner elements, so no wonder that the product obtained as a result of casting is characterized by substantial deformations of its shape caused by contraction of the cast material. In consequence, the final product shows considerable dimensional deviations from its design.

Especially when products of complicated shapes are designed and molded, it is important to automate the designing of both product geometry and product molds, and the designing of the technological process, and to have the possibility to make corrections in the design of the product geometry and/or the mold as well as the design of the course of the product manufacturing process in the reactive molding technology.

Moreover, now, in practical industrial applications, new products must feature perfect technical parameters and high quality. The time of designing the final product should be as short as possible, especially in developed highly competitive industries, such as the electric power industry. A reduction in the time of delivery of a final product to the market yields measurable economic benefits. In addition, it can help to accelerate the development of completely new concepts of technical solutions for the product and its mold.

Now, the fast development of new numerical calculation techniques and availability of working stations with high computing powers make it possible to reduce the time necessary to design and manufacture final products, at the same time maintaining their high quality and reability. Continuing this trend, numerical computing is more and more often used for solving design tasks on an industrial scale, where frequently in the course of implementation of methods and systems of automated product designing the designers analyze at the same time the flows of fluids and the problems of transport of heat and mass within a designed geometrical model of a product and its mold. In the case of a process in the reactive molding technology, in order to better understand the physical phenomena the knowledge of the structure of highly complex 3-dimentional geometries and the ability to analyze them is required. Partial differential equations, for example Navier-Stokes equations, which describe mathematically and completely fluid movement and heat exchange, usually are not suitable for an analytic solution, with the exception of simple cases, because their degree of complication is too great. Therefore, solution of such equations on an industrial scale is possible only in a numerical way using the methods of numerical fluid mechanics.

Generally speaking, numerical fluid mechanics is based on computational techniques allowing, among other things, dynamic analysis of liquids and gases being in motion, heat exchange and so on. The basic stages allowing the analysis of the movement of fluid particles are: preparation of a numerical model of the product and its mold by preparing the geometry in CAD, generation of a suitable numerical grid of the product and its mold, i.e. discretization of the computing domain, definition of the parameters of the technological process for the numerical model of the product and its mold, i.e. for instance the boundary conditions, material properties and so on, and then execution of numerical computations.

The stage of generating the numerical grid of the product and its mold can be described as the decomposition of the preset geometrical space into a finite number of control volumes (balance subareas, whose nodes located in the center of the volume represent averaged values for which the mass conservation law, the principle of conservation of momentum, the principle of conservation of energy are maintained locally and globally). This stage is of critical significance in the process of numerical calculations due to the lack of fully automated procedures for generating numerical grids. A very good example that illustrates the high degree of complication of industrial cases, from the geometric point of view, are products made in the technological process of filling and curing of epoxy resins. The large number of internal components of a product sealed in resin and their complicated shapes cause that the stage of generating the numerical grid of the product and its mold, that is the stage of discretization of the computational domain, becomes very demanding - even for experienced users of specialized computer programs such as CFD (Computational Fluid Dynamics).

That is why factories, normally lacking direct and prompt support from development centers, expect access to automated methods allowing to obtain good-quality numerical grids of a product and its mold for calculations in a CFD computer program, to perform calculations in a CFD computer program, to report the results of calculations from a CFD computer program.

In currently used solutions, all the required design stages are executed manually by means of autonomous computer programs which are not directly linked to one another. Their operation is time-consuming and requires the user to possess specialized expertise in many areas connected with numerical modeling.

And so, patent description No. US 4 989 166 (Method for synthesizing analysis model and flow analysis system) of January 29, 1991, shows a method for designing products aided by numerical computations, which is based on determining the course of filling the mold and the propagation of the curing front using a computing machine furnished with, among other things, a screen, a keyboard and a mouse used by the user for manually operating the system. The described way of designing products requires the user to possess specialized knowledge of the implemented software, proficiency in using this software depending on the designed case, and a direct and full, not just remote, access to a computing machine. In the product designing method revealed in the above mentioned patent description, all the component parts of the geometrical model of the designed product are reduced to the form of very simple structures for which a diagram of heat transfer calculation has been predetermined. In the geometrical model of the product, one of the three available diagrams of heat transfer P1, P2 or P3 is assigned to the searched out and stored component parts, which diagrams are next solved separately by three modeling programs M1, M2, M3 assigned to them respectively. Then structures which neighbor on each other are searched out and communication takes place - flow of information about the parameters of the technological process connected with mass and heat transfer. As the final result we receive a complete model of resin flow and information how resin viscosity changes during the filling stage. Such simplifications can be applied to very simple, uncomplicated geometrical models of products.

There are known many commercial specialized computing programs (SIGMASOFT, FLUENT, MAGMASOFT, FLOW3D and the like) by means of which the user is able to determine the process parameters and design a product and its mold.

However, each of the mentioned methods of product designing, including the method according to the above mentioned patent, requires extensive knowledge and, first of all, experience in using such commercial specialized computing programs. If we also consider the always present desire for solving designing problems on an industrial scale, where the geometrical models of products and their molds are characterized by a very high degree of complexity, we will see that the method of designing a product and its mold and of determining the parameters of the process are strictly restricted to a narrow group of specialists who possess very high theoretical knowledge of numerical modeling and extensive practical experience.

**The aim of the invention is** the development of a method and a system for designing the geometry of a product and its mold and of a process of product manufacturing in the reactive molding technology, which will ensure automation of the design of both the geometry of products and their molds, as well as, automation of the design of a technological process and also a possibility to make corrections in the design of the geometry of the product and/or its mold and a correction in the course of the process of manufacturing a product in the reactive molding technology.

Another aim of the invention is the development of a method and a system as above, which will make it possible to reduce the time necessary to design a product and its mold, to reduce the time for generating the numerical grid of a product and its mold i.e. discretization of the computational domain, and to reduce the time required for selecting the technical parameters of the process in the reactive molding technology, that is the technical parameters of the technological process of filling and curing of a resin mixture material.

Still another aim of the invention is the development of a method and a system which will allow to reduce the requirements relating to the extensive knowledge and experience of the user and connected with the preparation and start of numerical computations, and which therefore will allow to increase the availability of the product designing method under discussion for users who do not have sufficient knowledge to conduct numerical computations single-handedly.

One more aim of the invention is also the development of a method and system which will improve the economy of the final product by reducing the costs of the implementation of the method of designing the geometry and/or the mold of the product and of the product manufacturing process in the reactive molding technology connected with the need to purchase, implement and manage the license resources of commercial specialized computer programs, and also by reducing the costs of producing a system for the execution of this method connected with the need to purchase, implement and manage the working stations.

An aim of the invention is also to allow remote access to the results of numerical computations.

**A method for designing the geometry of a product and/or its mold and the process of its manufacturing in the reactive molding technology, according to the invention**, in which methods of numerical fluid mechanics and computer programs implemented in computer devices are used, and which is characterized in that:
**in step one** a geometrical model of the product and its mold is generated, the computational domains for the product and its mold as well as the data of the geometrical model are defined and these are then converted to a format suitable for transfer between the implemented computer programs;
**in step two** a Web page assigned to the second step and containing the group of available computing variants is called, the available computing variant is selected from the group of computing variants available on the Web page, after which the processed data of the geometrical model of the product and its mold are sent to a computer device of a computing server in which the data are analyzed and further processing is done automatically according to the selected computing variant;
**in step three,** an individual Web page is automatically generated in the computer device of the computing server, on which page the parameters of the product manufacturing process are defined manually and by means of this page a command to start the sequence of automated numerical computations related to the designing of the geometry of the product and/or its mold and of the product manufacturing process is given, using a supervisor program implemented in the computer device of the computing server; after which,
**in step four,** a numerical grid of the product and its mold is automatically generated in the form of a file with the data of the numerical grid in a format accepted by the computer device of the computing server;
**in step five,** on the basis of the product manufacturing process parameters and based on the data of the numerical grid of the product and its mold, numerical computations of the reactive molding of the product are performed and the results of the numerical computations of the reactive molding of the product are automatically generated in the form of images and computer animations showing the process of filling and curing in consecutive time steps, to be visualized in the user's computer device; and
**in step six,** a Web page assigned to step six is invoked in the user's computer device, which page presents the results of the numerical computations of the reactive molding of the product and makes the presented results available for analysis of the obtained design of the product and/or its mold and for correction of the design of the product and/or its mold by a modification of the already created or by creation of an new geometrical model of the product and/or its mold in step one or a modification of the product manufacturing process parameters in step three of this method.

Preferably, the geometrical model of the product and/or its mold is generated in a specialized computer program of the CAD type.

Preferably, the computational domains of the product and its mold in which mass and heat transfers occur are defined by being marked in an explicit and distinctive way.

Preferably, the computational domains in which mass and heat transfers take place are marked by designations beginning with the word "fluid".

Preferably, the computational domains of the product and its mold in which only heat transfers take place are defined by being marked in an explicit and distinctive way.

Preferably, the computational domains in which only heat transfers take place are marked by designations beginning with the word "solid".

Preferably, the data of the geometrical model of the product and its mold are exported to a data file in the "STEP" format.

Preferably, calling Web pages in steps two and six and specially generated pages in step three is done by means of an intranet or internet computer network.

Preferably, Web pages for communication between the user and the computer device of the computing server of the system are automatically generated by computer programs installed in the computer device of the computing server of the system for the realization of the method for designing the geometry of a product and/or its mold and the product manufacturing process.

**A system for the realization of the method for designing the geometry of a product and/or its mold and of the product process in the reactive molding technology, according to the invention**, which employs computer programs used in computing methods relating to numerical fluid mechanics, comprises the user's computer device with installed computer programs for generating the geometrical model of a product and/or its mold and for calling Web pages in a computer network, which computer device is connected with the said computer network, and contains a computer device of a computing server, which device is connected with the said computer network, and is characterized by the fact that the computer device of the computing server comprises:
**a graphical interface module** for calling Web pages, realized in step two and six of the method, and also in step three for generating Web pages, and used for communication between the computing server and the user through the user's computer device;
**an import module** for importing data generated in the user's computer device in the first step of the method and relating to the geometrical model of the product and its mold by the computer device of the computing server;
**a module for generating the numerical grid of the product and its mold** on the basis of the geometrical model of the product and its mold to a suitable format, realized in step four of the method;
**a computing module** for computing the product manufacturing process in the reactive molding technology on the basis of the parameters of the product manufacturing process and on the basis of the data of the numerical grid of the product and its mold, realized in step five of the method; and
**a results presentation module** for presenting the results of the numerical computations of the reactive molding of the product and for making the presented results available for an analysis of the obtained design of the product and its mold and for taking the decision about making a correction of the design of the product and/or its mold by preparing the above mentioned presentation of the results, realized in step six of the method.

Preferably, the graphical interface module is connected with the import module for importing data of the geometrical model of the product and its mold, with the results presentation module, and with the user's computer device.

Preferably, the import module for importing data of the geometrical model of the product and its mold, the numerical grid generating module, the computing module and the results presentation module can communicate with one another in the memory of the computer device of the computing server.

Preferably, the user's computer device and the computer device of the computing server are interconnected through an intranet or internet computer network.

A product, according to the invention, in the form of a computer program contains a computer program code which is executable in the user's computer device and in the computer device of the computing server and which executes steps according to the method presented in claims 1-9.

**The main advantage of the invention is that** the way of designing the geometry of a product and/or its mold as well as the product manufacturing process in the reactive molding technology has been improved and optimized, and thereby improved and optimized has been the complete technological process of the final product obtained by filling and curing a resin mixture material.

An advantage of the invention is that it automates both the design of the geometry of products and their forms and the design of the technological process. Owing to this, the most important steps or actions necessary to realize the inventive method are realized automatically.

Another advantage of the invention is that it offers a possibility to make corrections to the design of the geometry of the product and/or its mold and corrections to the design of the course of the product manufacturing process in the reactive molding technology.

The inventive method and system permits a reduction in the time of designing a product and/or its mold, a reduction in the time of selecting the technical parameters of reactive molding i.e. the technical parameters of the process of filling and curing epoxy resins, a reduction in the time of generating the numerical grid of a product and its mold i.e. discretization of the computational domain, and a reduction in the time of numerical computations.

An advantage of the invention is that its use allows to lower the requirements relating to the knowledge and experience of the user necessary to prepare and launch the numerical computations, and therefore it increases the availability of the described method for designing products for users who do not have enough knowledge to conduct numerical computations single-handedly.

The costs of realization of the method according to the invention are low, as there is no need to purchase, implement and manage the license resources of commercial specialized software.

The system according to the invention has low investment and maintenance costs since there is no need to purchase, implement and manage working stations.

Moreover, an advantage of this invention is that it enables remote access to the results of numerical computations.

**The subject of the invention in preferable embodiments is shown in the drawing** whose fig. 1A shows, in the form of a simplified diagram, prepared for reading in, a geometrical model of a hypothetical product which is a current and voltage transformer manufactured according to the inventive method in the inventive system, fig. 1B shows, in the form of a simplified diagram, the actions of preparing the computational domains in the geometrical model from fig. 1A, fig. 2 shows a simplified block diagram of the inventive method, fig. 3 shows a block diagram of a preferable embodiment of the realization of the inventive method, and fig. 4 shows a simplified diagram of the inventive system.

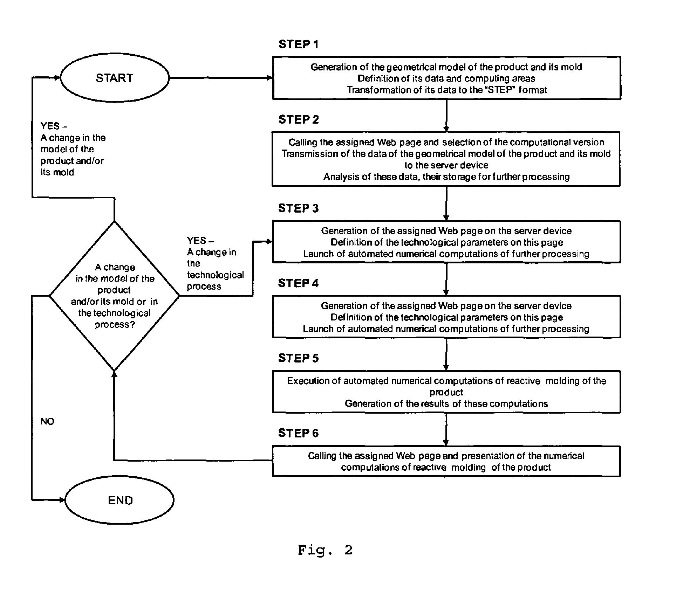

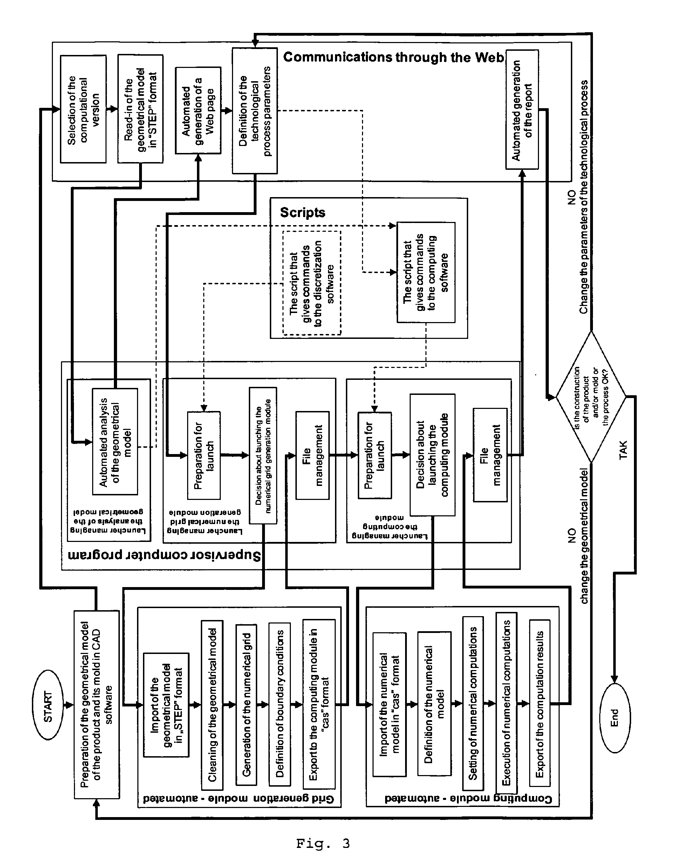

Fig. 2 presents a simplified block diagram of the method for designing the geometry of a product and/or its mold as well as the product manufacturing process in the reactive molding technology according to the invention, which shows six consecutive main steps of the method as described below. Then, Fig. 3 presents a block diagram of a preferred embodiment of the inventive method, where continuous lines indicate the flow of control signals, or control signals and signals containing data, and dashed lines indicate only the flow of signals containing data.

The method according to this invention is based on the methods of numerical fluid mechanics which uses CFD type programs (CFD - Computational Fluid Dynamics) and in the preferred embodiment it consists of the following steps, actions and tasks:

### 1. Step one

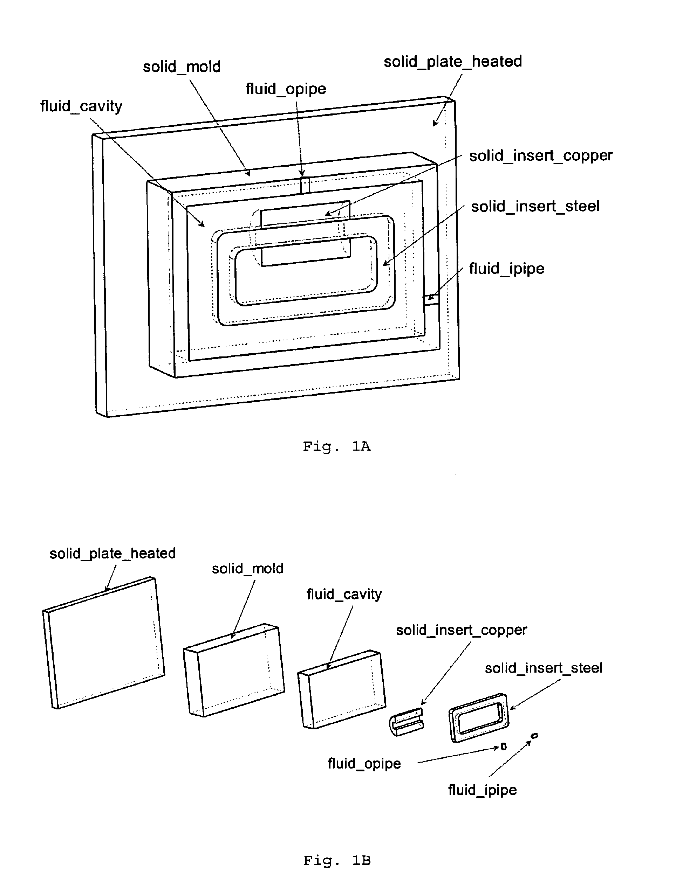

1.1. Generation of a suitable input geometrical model of the product and its mold in a commercial CAD type computer program.
1.2. Definition of all computational domains of the product and its mold, called regions, according to the following rules:
1.2.1. All areas that are important from the point of view of the technological process and the product construction has to be named along the following rules:
1.2.1.1. All regions in which flow of both mass and heat takes place, which is illustrated by fig. 1A and 1B, begin with the word "fluid";
1.2.1.2. All regions in which flow of only heat takes place, which is illustrated by fig. 1A and 1B, begin from the word "solid";
1.2.2. All other regions, such as bolts, supply cables, washers and other small ones not affecting the result of numerical computations, can remain unnamed, but in such case they will be removed in the course of the automatic processing of the geometrical model of the product and its mold;
1.2.3. Storing all filled regions and refraining from logical operations of cutting in the geometrical model of the product and/or its mold;
1.2.4. Indication of the plane of symmetry in the model, if applicable;
1.3. Conversion of the geometrical model of the product and its mold to a format suitable for data transfer, preferably to the "STEP" format according to the standard: ISO-10303-21 (Industrial automation systems and integration - Product data representation and exchange, Part 21: Implementation methods: Clear text encoding of the exchange structure, Second edition 2002-01-15), and storage of the data of the geometrical model of the product and its mold on a hard disk HDD1, which is a component of the user's computer device;

The above mentioned format "STEP" is used for transferring the data about the features of the designed geometrical model of the product and/or its mold between CAD type and CAE type (Computer Aided Engineering) software. This format has been, preferably, selected as the data carrier from among many available formats, considering its capacity to transfer information about the name of regions, which is important for the realization of this method.

In the above described step one the user decides which regions of the designed product and its mold are to be taken into consideration during further numerical computations - this selection is done by giving names to regions that begin with the words "solid" or "fluid".

### 2. Step two

In step two, the user connects through an intranet or internet to a Web page of the computer device of the computing server, which page is assigned to step two and contains a group of available computing options, and by means of this page the user selects a computing option suitable for the designed product and its mold. The Web page has been designed to enable a selection from among different computing options which will be executed in the computer device of the computing server. Every such computing option will be executed in modules M1 - M5. Each of the modules M1 - M5 can use different computer programs depending on the definition of the selected computing option.

The geometrical model of the product and/or its mold is then read in by the Web page in the form of a file in the above mentioned "STEP" format.

Having been correctly read in, the geometrical model is automatically analyzed and processed to determine all regions of the types "fluid" and "solid". The file with so processed data which make the input geometrical model is stored for further processing on a hard disk HDD2 in the computer device of the computing server.

### 3. Step three

In step three, on the basis of the performed analysis of the data of the input geometrical model of the product and its mold, the computer programs of the computer device of the computing server generate a Web page that is individual for the above mentioned geometrical model of the product and its mold, by means of which the user defines manually the parameters of the technological process for the production of the final product, that is, for example, initial conditions such as initial temperatures, boundary conditions such as resin velocity at inlet, heating temperature, physical material properties of individual regions, operating parameters such as gravitational acceleration.

The loading of the said process parameters on a Web page will cause that the file with the parameters of the technological process will be stored in an appointed directory on the hard disk HDD2, and then a sequence of automatic numerical computations by means of a watcher program will be launched.

The function of the watcher is to observe the statuses of the progress of the stages of the sequence of automatic numerical computations of all computational tasks such as "ready to act", "work in progress", "completed". The watcher supervises also the statuses of launchers, or launching programs, such as "busy", "ready".

At the moment of the launch, the watcher receives a list of launchers for which it is responsible. During run-time, the watcher runs the launchers from the list it has received, when the stages of the sequence of computational tasks executed by these programs are available.

Every launcher executes three main groups of actions which are responsible for the preparation of the launch directory for the computer program that executes the respective computational task, for which the launcher is responsible, the launch of this computer program executing the given computational task and the copying of files necessary for processing in subsequent computer programs executing the given computational task and the removal of useless files. When the launcher finishes work with a given computational task, it stores information that the computational task has been completed and that it is ready to accept another computational task.

### 4. Step four

In the next, completely automated step four, the numerical grid of the product and its form is generated. The generation of the numerical grid in the discretizating software installed in the computer device of the computing server is launched and managed by a launcher. The identification and import of the input geometrical model that was prepared earlier in the said specialized CAD computer program is the responsibility of a specially prepared script i.e. a sequence of consecutive commands, which is a part of a module generating the numerical grid of the product and its mold M2. During step four, all regions and the respective names given to them are imported.

Then, the module generating the numerical grid M2 performs the next actions on the imported input geometrical model of the product and/or its mold, such as:
- geometry cleaning - within the preset tolerance, i.e. removal of holes, curves, intersecting edges, overlaying surfaces, and the like;
- division of the computing space into a finite number of control volumes; this is done in such way that the discretization software launched by the script, i.e. a sequence of commands following in succession, analyzes each region according to its name and then assigns the basic size to a single control volume for the given region. If the first attempt to generate the numerical grid fails, this action is repeated, the size of an individual control volume for the given region being reduced for instance by 25%. Both structural and non-structural numerical grids can be generated in regions;
- definition of the boundary conditions such as "*inlet, outlet, convection"* and the like for marked regions;
- export to a computing module M3 of a file with a stored division into a finite number of control volumes, with defined boundary conditions and with properly called regions. In the embodiment, the exported file has the extension "cas".

The "cas" file generated by the module generating the numerical grid M2 of the product and its mold is stored in a computer device in the computing server in a folder which is also accessible by the computing module M3.

### 5. Step five

In step five, numerical calculations of reactive molding are conducted in the computing module M3 on the basis of the parameters of the product manufacturing process and on the basis of the data of the numerical grid of the product and its mold. Next, the results of the numerical computations of reactive molding of the product are automatically generated in the form of images and computer animations presenting the state of the filling and curing process in consecutive time steps, which are visualized on the user's compute device.

The computing module M3 is another fully automated module launched and managed by a launcher.

The automatics of the computing module M3 is ensured by a specially prepared script, i.e. a sequence of commands following in succession and realized by a computing software installed in the computer device of the computing server.

For a specific computing case including an input geometrical model of the product and/or its mold, designed in a CAD type computer program for the parameters of the technological process of reactive molding that are defined on the said Web page, the said script is generated automatically. The script manages the operation of the computing software launched by a launcher.

At the very beginning of the operation of the computing module M3 the numerical grid with properly named boundary conditions is imported, whereupon the next actions and tasks are executed:
- preparation of the numerical model that has been divided into a finite number of control volumes in the numerical grid generating module M2. The preparation of the numerical model for computations is based also on the already mentioned definition of the technological process parameters that was made in step two;
- configuration of the computing module M3 in a strictly numerical context, which is to ensure stability and accuracy of computations. This refers to the selection of the proper settings of numerical parameters and mathematical models in the computing software, suitable for the given computing task. The selection of the settings of numerical parameters and mathematical models is strictly defined in a specially prepared, automatically generated script belonging to the computing module M3. The nature of the process of filling and curing epoxy resins is extremely complex and therefore it requires an analysis of many physical phenomena at the same time, such as multiphase flow of mass in three-dimensional space, the course of the curing reaction, coupled heat transfer, the exothermic effect that is disclosed in the course of the curing reaction. In this case, both built-in, standard mathematical models and a model of reaction kinetics which is not a standard mathematical model, are used to solve the computing task;
- Stability of computations, here represented mainly by convergence of the solution, which is controlled automatically by the module M3. Control and stability of computations is one of the main tasks which has been solved in the presented invention. All operations of the computing module M3 are performed in the computer device of the computing server in a mode invisible to the user;
- Export of the results in the form of images and computer animations showing the process of filling and curing in consecutive time steps. The export of the results is performed by the computing software controlled by the above mentioned script. Having completed this stage, the launcher moves the files with the said images and computer animations to the applicable folder on the hard disk HDD2 of the computer device of the computing server.

### 6. Step six

In step six, the result data generated in the computing module M3 are finally made available for the user by the applicable Web page, and also in the form of a PDF (Portable Document Format) file ready for printout.

The final report allows the user to decide whether the designed product and/or its mold and/or the technological process meet the predetermined technical conditions. Acceptance of the obtained results means the completion of the execution of the method according to the invention in the inventive system. Otherwise the user can continue the execution of the method according to the invention until the desired result is reached. In such case the user can do the following:
- modify the parameters of the technological process, and this action does not require a repeated reading-in of the geometrical model of the product and its mold; or
- change the geometrical model of the product and/or its mold, but in this case a new or corrected geometrical model of the product and/or its mold has to be consistently designed and read in, where subject to the correction may be only the product alone or the mold alone or both the product and its mold, and the consecutive steps of the inventive method have to be carried out until the results of the numerical computations of product reactive molding are obtained in step six.

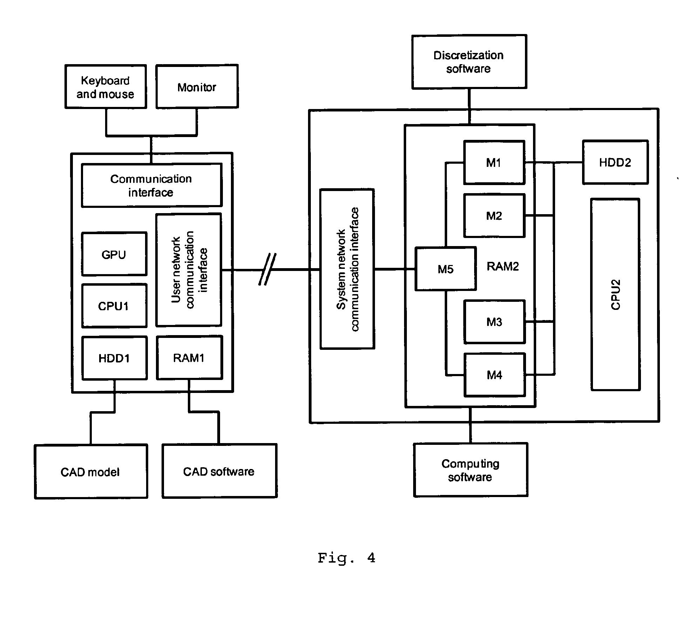

Fig. 4 presents a simplified diagram of the system for designing the geometry of a product and/or its mold and the product manufacturing process in the reactive molding technology, according to the invention. The system according to the present invention includes the following component elements: the user's computer device and the computer device of the computing server.

The user's computer device is furnished with an implemented commercial computer program of the CAD type, and an implemented computer program of a Web page type in the operational memory RAM1. The computer programs are executable in the main processor CPU1 and in a graphics processor GPU, and the operational memory RAM1, the main processor CPU1, and the graphics processor GPU are component elements of the user's computer device.

The user's computer device is connected to a computer network of the intranet or internet type to enable communication between the user and the computer device of the computing server. The geometrical model of the product and/or its mold is designed by the user using the said CAD software according to strictly defined rules presented above in the description of the method, and it is stored in the "STEP" format on the hard disk HDD1 which is a component element of the user's computer device.

The computer device of the computing server is connected to the said intranet or internet network to enable the user to access the computer device of the computing server and it contains the below mentioned modules, sub-modules and component parts. The modules of the computer device of the computing server have been implemented in the operational memory RAM2 and the computer programs of the modules are loadable to and executable in the main processor CPU2. The operational memory RAM2 and the main processor CPU2 are component parts of the computer device of the computing server.

### Graphical interface module M5

A graphical interface module M5 allows the user to communicate with the computer device of the computing server through a Web page in an internet or intranet network. The graphical interface module M5 generates Web pages enabling remote communication between the user's computer device and the computer device of the computing server.

The graphical interface module M5, by means of the generated Web pages, makes it possible to:
- by means of a work start signal S1, a signal of the display of the Web page associated with the import of the input model S2, the model export signal S3, and the input model import signal S4 - read in the input data of the geometrical model of the designed product and its mold that has been prepared earlier in the said CAD program;
- by means of a signal of the display of the Web page of the import of process parameters S7, a process parameters export signal S8, a process parameters import signal S9 - load the data about the parameters of the technological process of the designed product and its mold which will then be used in the computing module M3 which calculates the process of the reactive molding of the designed product and its mold;
- by means of a signal of generation of a presentation interface S23 and a report generation signal S24 - display the result after the completion of the main computations i.e. after finishing the operation of the computing module M3 and of a report generation module M4,

The graphical interface module M5 communicates with the user's computer device through a system network communication sub-module, a user network communication sub-module, a communication interface sub-module, a screen sub-module, and a keyboard and mouse sub-module.

The graphical interface module M5 supports the functions of the data import module M1 and of the results presentation module M4.

### Data import module M1

The user of the Web page created by the graphical interface module M5 generates an input model import signal S4 which starts the reading-in of the input data of the geometrical model of the designed product and its mold by the data import module M1.

Next the data import module M1 generates an input model storage signal S5, after which it stores the input data about the designed geometrical model of the product and its mold on the hard disk HDD2 which is a component of the computer device of the computing server.

Whereupon, the data import module M1 analyzes the structure of the geometrical model and stores the result of this analysis by means of a input model storage signal S6 on the said hard disk HDD2.

Furthermore, the graphical interface module M5 generates, by the above described signals, a Web page that allows the user to enter the process parameters of reactive molding and, by means of a process parameter import signal S9, transfers control to the data import module M1. The data import module M1 saves the received reactive molding parameters by means of a process parameters saving signal S10 on the said hard disk HDD2.

Control is transferred to the numerical grid generating module M2 by means of a numerical grid generation launch signal S11.

### The module generating the numerical grid M2

When the numerical grid generation module M2 receives the numerical grid generation launch signal S11, the geometrical model of the designed product and its mold is read in by means of a signal of the model reading-in to the grid generation S12 from the said hard disk HDD2 to the numerical grid M2. Next, the numerical grid generation module M2 by means of a regions discretization launch signal S13 launches step four of the inventive method consisting in generation of the numerical grid in a discretization software implemented in the said primary memory RAM2. The discretization software is controlled by a specially created script i.e. a sequence of commands following in succession so that it operates automatically.

The following actions are launched in the discretization software:
- automatic processing of the input data of the geometrical model of the designed product and its mold, which includes automatic detection and correction of errors in the geometrical model of the product and its mold within a preset tolerance;
- automated removal of regions present in the input geometrical model of the product and/or its mold, which do not begin with the words "fluid" or "solid";
- automated generation of the numerical grid of the designed product and its mold;
- automated definition of boundary conditions;
- export of result data, by means of a grid export signal S14, to a format which is accepted by the computing module M3 that calculates the technological process of reactive molding.

A numerical grid storage signal S15 launches the storage of the result data of the numerical grid of the designed product and its mold on the hard disk HDD2 for further processing in the computing module M3.

A computation launch signal S16 transfers the control of numerical computations to the computing module M3 which calculates the technological process of reactive molding.

### Computing module M3, computing the technological process of reactive molding

When the computing module M3 receives a computation launch signal S16, the data of the numerical grid of the designed geometrical model of the product and its mold are, by means of a signal for the numerical grid reading into computations S17, read in from the hard disk HDD2 to the computing module M3 for further processing.

The automated operation of the computing module M3 is ensured by a specially prepared script i.e. a sequence of commands following in succession executed by a computing software implemented in the operational memory RAM2 of the computer device of the computing server.

This script is generated automatically for a specific computing case including the input geometrical model of the designed product and/or its mold designed in a CAD program and for the parameters of its technological process of reactive molding defined on the said Web page. The said script controls the operation of the computing software.

A computation launch signal S18 launches a computer program that computes the technological process of reactive molding of the designed product, which is implemented in the operational memory RAM2. The computing software uses a CFD type numerical code and it is controlled by the said script for automatic operation.

The following actions are performed:
- automated assignment of the process parameters for the given computing case;
- automated definition of the numerical parameters of the computing software;
- automated running and control of the computations of the technological process of mold filling and epoxy resin curing;
- export of result data, by means of a calculation results export signal S19, in the form of images and computer animations.

The effect of the operation of computing module M3 are images and computer animations presenting the course of the technological process of reactive molding for the designed product and its mold.

A computation results storage signal S20 saves the results of the computations on the said hard disk HDD2.

A computation results presentation signal S21 transforms control to the results presentation module M4.

### Results presentation module M4

After the receipt of the computation results presentation signal S21 by the results presentation module M4, the results of the computations of the technological process of reactive molding for the designed product and its mold are read in, by means of a signal of reading-in the computation results to the results presentation S22, from the said hard disk HDD2 to the module M4 for further processing.

The module M4 processes the created images and computer animations to the form of final reports. The final reports are transmitted by means of a presentation interface generation signal S23 to the graphical interface module M5 from where they get, by means of a report presentation signal S24, to the screen of the user's computer device to be displayed.

On this basis, the user evaluates the designed product and/or its form and the parameters of its manufacturing process in respect of possible imperfections.

The shortcomings revealed in the final report on the computations, displayed on the screen of the user's computer device allow the user to redesign the product and/or its mold or to modify the parameters of the technological process, and to use the presented inventive system to repeat the computations. If it is necessary to change the geometrical model of the product and/or its mold, the CAD type computer program should be used again. In a situation where the shortcomings revealed in the report on the computations suggest the need to change the parameters of the technological process, only their change on the said Web page is required.

A schematic flow of signals in the inventive system for the realization of the inventive method is presented below
User → M5 - the work start signal S1
M5 → User - the signal of the display of the Web page associated with the import of the input model S2
User → M5 - the model export signal S3
M5 → M1 - the input model import signal S4
M1 → HDD2 - the input model storage signal S5 on HDD2
M1 → HDD2 - input model storage signal S6 on HDD2
User → M5 - signal of the display of the Web page of the import of process parameters S7
User → M5 - the process parameters export signal S8
M5 →M1 - the process parameters import signal S9
M1 → HDD2 - the process parameters saving signal S10 on HDD2
M1 → M2 - the numerical grid generation launch signal S11 HDD2 → M2 - the signal of the model reading into the grid generation S12
M2 → RAM2 (the discretization software) - the regions discratization launch signal S13
RAM2 (the discretization software) → M2 - the grid export signal S14
M2 → HDD2 - the numerical grid storage signal S15
M2 → M3 - the computation launch signal S16
HDD2 → M3 - the signal for the numerical grid reading into the computations S17
M3 → RAM2 (the computing software) - the computation launch signal S18
M3 → RAM2 (the computing software) → M3 - the calculation results export signal S19
M3 → HHD2 - the computation results storage signal S20
M3 → M4 - the computation results presentation signal S21 HDD2 → M4 - the signal of reading-in the computation results to the results presentation S22
M4 → M5 - the presentation interface generation signal S23
M5 → User - the report presentation signal S24

## Claims

1. A method for designing the geometry of a product and/or its mold and the product manufacturing process in the reactive molding technology, which uses the methods of numerical fluid mechanics and computer software implemented in computer devices, **characterized in that**
**in step one a** geometrical model of the product and/or its mold is generated, the computing areas for the product and its mold as well as the data of the geometrical model are defined and these are then converted to a format suitable for transfer between the implemented computer programs,
**in step two** the Web page assigned to the second step and containing a group of available computing variants is called, an available computing variant is selected from the group of computing variants available on the Web page, after which the processed data about the geometrical model of the product and its mold are sent to a computer device of a computing server in which the data are analyzed and further processing is done automatically according to the selected computing variant;
**in step three**, an individual Web page is automatically generated in the computer device of the computing server, on which page the parameters of the product manufacturing process are defined manually and on this Web page a sequence of automated numerical computations related to the designing of the geometry of the product and/or its mold and of the product manufacturing process is launched using a supervisor program implemented in the computer device of the computing server;
**in step four**, a numerical grid of the product and its mold is automatically generated in the form of a file with the data about the numerical grid in a format accepted by the computer device of the computing server;
**in step five**, on the basis of the product manufacturing process parameters and based on the data of the numerical grid of the product and its mold, numerical computations of the reactive molding of the product are performed and the results of the numerical computations of the reactive molding of the product are automatically generated in the form of images and computer animations showing the process of folling and curing in consecutive time steps, to be visualized in the user's computer device;
**in step six**, a Web page assigned to step six is called in the user's computer device, which page presents the results of the numerical computations of the reactive molding of the product and makes the presented results available for analysis of the obtained design of the product and/or its mold and for correction of the design of the product and/or its mold and/or the technological process of reactive molding by a modification of the already created or by creation of an new geometrical model of the product and/or its mold in step one or a modification of the product manufacturing process parameters in step three of this method.

2. A method according to claim 1, **characterized in that** the geometrical model of the product and/or its mold is generated in a specialist CAD type computer program.

3. A method according to claim 1 or 2, **characterized in that** the computing domains of the product and its mold, in which mass and heat transfers take place, are defined by being marked in an explicit and distinctive way.

4. A method according to claim 3, **characterized in that** the computational domains in which mass and heat transfers take place are marked by a designation beginning with the word "fluid".

5. A method according to claim 1 or 2 or 3 or 4, **characterized in that** the computational domains of the product and its mold, in which only heat transfers take place, are defined by being marked in an explicit and distinctive way.

6. A method according to claim 5, **characterized in that** the computational domains in which only heat transfers take place are marked by a designation beginning with the word "solid".

7. A method according to any of the preceding claims, **characterized in that** the data of the geometrical model of the product and its mold are exported to a data file in the "STEP" format.

8. A method according to any of the preceding claims, **characterized in that** the Web pages in steps two and six are called and the pages in step three are generated by means of an intranet or internet type computer network.

9. A method according to any of the preceding claims, **characterized in that** the Web pages for communication between the user and the computer device of the computing server of the system are automatically generated by computer programs installed in the computer device of the computing server of the system for the realization of the method for designing the geometry of a product and/or its mold and the product manufacturing process.

10. A system for the realization of the method according to any of claims 1 through 9, using computer programs applied in computing methods concerning the numerical fluid mechanics, containing the user's computer device with installed computer programs for creating a geometrical model of the product and/or its mold and for calling Web pages in a computer network, which computer device is connected with the said computer network, and containing a computer device of a computing server which device is connected with the said computer network, **characterized in that** the computer device of the computing server contains:
- a graphical interface module (M5) for calling Web pages realized in step two and six of the method, and also in step three of the method for generating Web pages, and used for communication between the computing server and the user through the user's computer device,
- a data import module (M1) for data generated in the user's computer device in step one of the method, and concerning the geometrical model of the product and its mold, by the computer device of the computing server,
- a module generating the numerical grid (M2) of the product and its mold on the basis of data about the geometrical model of the product and its mold to a suitable format, realized in step four of the method;
- a computing module (M3) for computing the product manufacturing process in the reactive molding technology on the basis of the parameters of the product manufacturing process and on the basis of the data of the numerical grid of the product, realized in step five of the method,
- a results presentation module (M4) for presenting the results of numerical computations of reactive molding of a product and for making the presented results available for an analysis of the obtained design of the product and/or its mold and for making corrections of the design of the product and/or its mold by preparing the said presentation of the results realized in step six of the method.

11. A system according to claim 10, **characterized in that** a graphical interface module (M5) is connected with the data import module (M1) for the data about the geometrical model of the product and its mold, with a results presentation module (M4), and with the user's computer device.

12. A system according to claim 10 or 11, **characterized in that** the data import module (M1) for the data about the geometrical model of the product and its mold, the numerical grid generating module (M2), the computing module (M3), and the results presentation module (M4) can communicate with one another in the operational memory (RAM2) of the computer device of the computing server.

13. A system according to claim 10 or 11 or 12, **characterized in that** the user's computer device and the computer device of the computing server are connected with each other through an intranet or internet type computer network.

14. A product in the form of a computer program containing the code of the computer program which when executed on the user's computer device and on the computer device of the computing server, performs the steps according to the method presented in claims 1 through 9.
